# EUROPÄISCHE PATENTSCHRIFT

(11) **EP 2 081 390 B1**
(45) Veröffentlichungstag und Bekanntmachung des Hinweises auf die Patenterteilung: **12.05.2010**
(21) Anmeldenummer: 08001442.6
(22) Anmeldetag: 25.01.2008
(51) Int. Cl.: H04N 17/00

(54) **Kalibrierkörper zum Kalibrieren des Abbildungsmaßstabes einer Kamera sowie Kalibrierverfahren**
Calibration body for calibrating the reproduction scale of a camera and calibration method
Corps de calibrage destiné à calibrer l'échelle d'image d'une caméra et procédé de calibrage

(30) Priorität: 21.01.2008 EP 08001043
(43) Veröffentlichungstag der Anmeldung: 22.07.2009
(73) Patentinhaber: Texmag GmbH Vertriebsgesellschaft, 8800 Thalwil (CH)
(72) Erfinder: Bössmann, Hartmut, 33803 Steinhagen (DE)
(74) Vertreter: Witzany, Manfred

(56) Entgegenhaltungen:
- EP-A- 1 251 347

## Beschreibung

Aus der DE 101 18 886 B4 ist ein Kalibrierlineal bekannt, welches eine aufgedruckte Markierung enthält, die von einer Kamera erfaßbar ist. Diese Markierung codiert den jeweiligen Ort, so daß auf diese Weise auch die exakte Länge des Erfassungsbereiches der Kamera bestimmbar ist. Dieses Kalibrierlineal setzt allerdings voraus, daß das zu erfassende Objekt flach ist und sich in einer definierten, nicht veränderlichen Lage befindet. Bei Warenbahnen im Textil-, Papier- bzw. Kunststoffbereich ist diese Bedingung wegen der vernachlässigbaren Warenbahndicke problemlos erfüllbar, beispielsweise bei Gummibahnen führt diese Einschränkung jedoch zu nicht tolerierbaren Problemen. Hier ist es notwendig, auch den Einfluß der Bahndicke auf die Kalibrierung der Kamera zu berücksichtigen.

Der Erfindung liegt die Aufgabe zugrunde, einen Kalibrierkörper der eingangs genannten Art zu schaffen, der bei einfachem Aufbau auch eine Dickenabhängigkeit eines zu erfassenden Objekts berücksichtigt. Außerdem soll ein entsprechendes Kalibrierverfahren geschaffen werden.

Diese Aufgabe wird erfindungsgemäß mit den Merkmalen des Patentanspruchs 1 sowie mit den Verfahrensschritten des Patentanspruchs 8 gelöst.

Der Kalibrierkörper gemäß Anspruch 1 dient zum Kalibrieren des Abbildungsmaßstabes einer Kamera. Als Kamera wird vorzugsweise eine CCD- oder CMOS-Kamera eingesetzt, wobei alternativ auch andere Bilderzeugungsverfahren genutzt werden können. Es spielt auch keine Rolle, ob die Kamera eine Matrix- oder Zeilenkamera ist. Insbesondere in den Anwendungsfällen, in denen mit der Kamera Objekte in Form von laufenden Warenbahnen abgetastet werden sollen, ist eine Zeilenkamera, die quer zur Laufrichtung ausgerichtet ist, völlig ausreichend. In diesem Fall reicht eine Kalibrierung in Zeilenrichtung aus. Bei einer Matrixkamera kann die Kalibrierung je nach Anwendung in Zeilen-und/oder Spaltenrichtung erfolgen. Der Abbildungsmaßstab der Kamera ist zur Ermittlung exakter Meßgrößen wichtig. Er hängt jedoch sowohl von der Lage wie auch von der Ausrichtung der Kamera ab. Außerdem ändert sich der Abbildungsmaßstab auch mit der Dicke des zu untersuchenden Objekts, da die von der Kamera betrachtete Fläche bei dikkeren Objekten näher an der Kamera liegt als bei dünneren Objekten. Diese Unterschiede spielen insbesondere bei einer meßtechnisch exakten Objekterfassung eine Rolle. Zur Lösung dieses Problems wird ein Kaliebrierkörper einge-setzt, der mindestens einen Kalibrierbereich aufweist. In diesem Kalibrierbereich befindet sich mindestens eine von der Kamera erfaßbare Durchbrechung bzw. Einbuchtung. Die Größe bzw. der gegenseitige Abstand der Durchbrechung bzw. Einbuchtung ist dabei bekannt, so daß die von der Kamera erfaßten Meßgrößen mit bekannten geometrischen Abmessungen des Kalibrierkörpers verglichen werden können. Auf diese Weise kann der von der Montage und Ausrichtung abhängige Abbildungsmaßstab der Kamera ermittelt werden. Sind mehrere Durchbrechungen bzw. Einbuchtungen vorgesehen, kann dieser Abbildungsmaßstab auch als Funktion des Ortes im Sichtfeld der Kamera berechnet werden, um auf diese Weise auch Abbildungsfehler des Objektivs, wie beispielsweise eine trapezartige Verzerrung des Kamerabildes zu korrigieren.

Um zusätzlich die Abhängigkeit des Abbildungsmaßstabes von der Dicke des zu erfassenden Objekts zu bestimmen, ist es grundsätzlich ausreichend, die Kamera in zwei verschiedene Objektebenen zu kalibrieren, sofern die Lagen dieser Ebenen bekannt sind. Dabei ist es nicht zweckmäßig, einen Kalibrierkörper mit dickem Kalibrierbereich einzusetzen, da auf diese Weise das Problem einer unsicheren Erfassung von Ober- und Unterkanten des Kalibrierkörpers entsteht. Zur Lösung dieser Aufgabe weist der Kalibrierkörper mindestens einen Stützfuß auf, dessen Länge derart gewählt ist, daß durch Umdrehen des Kalibrierkörpers und Abstellen auf den mindestens einen Stützfuß im Abbildungsmaßstab des Kamerabildes eine auswertbare Veränderung entsteht. Der mindestens eine Stützfuß ist mindestens doppelt so lang wie die Dicke des Kalibrierkörpers im Kalibrierbereich. Damit befindet sich der Kalibrierbereich bei umgedrehter Lage des Kalibrierkörpers meßbar an der Kamera, so daß sich der Abbildungsmaßstab entsprechend verändert. Diese meßbare Veränderung des Abbildungsmaßstabes ergibt dann die gewünschte Dickenabhängigkeit vom Objekt, so daß auf diese Weise der Abbildungsmaßstab des Kamerabildes in Abhängigkeit von der jeweiligen Objektdicke kalibriert ist. Grundsätzlich ist auch daran gedacht, den Abbildungsmaßstab als Funktion des Ortes im Sichtfeld der Kamera zu bestimmen, um möglichst exakte geometrische Messungen mit der Kamera ausführen zu können.

Bei der Erfassung des Kalibrierkörpers durch die Kamera ergibt sich das grundsätzliche Problem, daß die Kamera einerseits die Oberkante und andererseits die Unterkante des Kalibrierkörpers erfaßt, wobei je nach Position der Kamera die Unterkante manchmal von der Oberkante verdeckt ist. Um Kalibrierfehler aufgrund dieser Unbekannten zu vermeiden, weist der Kalibrierkörper im Kalibrierbereich gemäß Anspruch 2 eine derart geringe Wandstärke auf, daß Ober- und Unterkanten der Durchbrechungen bzw. Einbuchtungen im Kamerabild für den Kalibriervorgang vernachlässigbare Unterschiede ergeben. Aufgrund dieser dünnen Wandstärke des Kalibrierkörpers im Kalibrierbereich sieht die Kamera im wesentlichen nur eine Kante im Bereich der Durchbrechung, so daß Fehlerfassungen der Durchbrechung bzw. Einbuchtung ausgeschlossen sind.

Gemäß Anspruch 3 ist es günstig, wenn der Kalibrierkörper im Kalibrierbereich eine Dicke von höchstens 2 mm aufweist. Bei den in der Praxis vorkommenden Dimensionen und Ausrichtungen der Kamera können Ober- und Unterkante des Kalibrierkörpers in diesem Fall nicht mehr unterschieden werden, so daß ein damit verbundener Meßfehler im Bereich der Pixelauflösung der Kamera liegt und damit vernachlässigt werden kann.

Für den Stützfuß hat sich gemäß Anspruch 4 eine Länge von mindestens 10 mm bewährt. Insbesondere bei industriellen Anwendungen mit Kameraentfernungen im Bereich von höchstens einem Meter ergibt sich auf diese Weise bereits eine hinreichend genau meßbare Veränderung des Abbildungsmaßstabes, so daß die Abhängigkeit des Abbildungsmaßstabes von der Objektdicke auf diese Weise hinreichend genau kalibriert ist.

Wird nur ein einziger Stützfuß eingesetzt, so ist dieser vorzugsweise in der Mitte des Kalibrierkörpers vorgesehen, um diesen auf dem Stützfuß stehend im Gleichgewicht zu halten. Alternativ können auch mehrere Stützfüße vorgesehen sein, und/oder der mindestens eine Stützfuß als vom Kalibrierkörper abstehender Steg ausgebildet sein. Gemäß Anspruch 5 ist es in diesem Fall günstig, wenn der mindestens eine Stützfuß randseitig zum Kalibrierkörper vorgesehen ist. Auf diese Weise schützt der mindestens eine Stützfuß den Kalibrierbereich des Kalibrierkörpers vor Krafteinwirkungen und damit vor Zerstörungen. Dies ist insbesondere im rauhen Industriebereich von Bedeutung.

Ein besonders wirksamer Schutz des Kalibrierbereichs ergibt sich gemäß Anspruch 6 durch eine U- bzw. rahmenförmige Ausbildung des Stützfußes. Außerdem führt der Stützfuß in diesem Fall zu einer erhöhten mechanischen Festigkeit des Kalibrierkörpers und verstärkt insbesondere den empfindlichen Kalibrierbereich. Dies erhöht damit auch die Maßhaltigkeit des Kalibrierbereichs.

Um eine Unsicherheit bei der Erfassung einerseits einer Oberkante und andererseits einer Unterkante des Kalibrierkörpers zu vermeiden, ist es gemäß Anspruch 7 vorteilhaft, wenn der Kalibrierkörper mindestens eine Indexierung aufweist. Diese Indexierung kann beispielsweise als Bohrung, Vertiefung, Zapfen oder dergleichen ausgebildet sein und korrespondiert mit einer entsprechenden Indexierung im Erfassungsbereich der Kamera. Auf diese Weise ist sichergestellt, daß der Kalibrierkörper stets in gleicher, reproduzierbarer Weise angeordnet ist. Damit ist klar, welche Strukturen des Kalibrierkörpers an der Oberkante und welche an der Unterkante von der Kamera erfaßt werden. Eine besonders dünne Ausbildung des Kalibrierkörpers im Kalibrierbereich ist in diesem Fall nicht erforderlich.

Zum Kalibrieren der Kamera hat sich das Kalibrierverfahren gemäß Anspruch 8 bewährt. Dabei wird mindestens ein Kalibrierkörper der vorbeschriebenen Art in ein Sichtfeld der Kamera gelegt und ein erstes Bild erzeugt. Dieses Bild enthält dabei geometrische Daten des Kalibrierkörpers zusammen mit grundsätzlich noch unbekannten Abbildungsfunktionen der Kamera. Diese Abbildungsfunktionen hängen insbesondere von der Lage und Ausrichtung der Kamera sowie von der Brennweite und Einstellung des Kameraobjektivs ab. Nachdem die geometrischen Eigenschaften des Kalibrierkörpers bekannt sind, kann durch Vergleich des Kamerabildes mit den geometrischen Größen des Kalibrierkörpers der Abbildungsmaßstab der Kamera berechnet werden. Um zusätzlich die Abhängigkeit des Abbildungsmaßstabes von einer Objektdicke zu berücksichtigen, wird der Kalibrierkörper umgedreht und mit der Kamera ein weiteres Bild erzeugt. Dabei ändern sich die geometrischen Eigenschaften des Kalibrierkörpers selbst nicht. Es ist lediglich der Kalibrierbereich um die Länge des mindestens einen Stützfußes näher zur Kamera herangerückt. Aus der damit verbundenen Veränderung des Abbildungsmaßstabes wird anschließend eine lineare Funktion des Abbildungsmaßstabes von der Objektdicke berechnet. Dabei entspricht der Abbildungsmaßstab beim ersten erzeugten Bild der Objektdicke Null und beim zweiten erzeugten Bild einer Objektdicke, die der Stützfußlänge entspricht. Damit kann der Abbildungsmaßstab für jede beliebige Objektdicke durch Anwenden dieser linearen Funktion berechnet werden.

Gemäß Anspruch 9 ist es günstig, wenn der Abbildungsmaßstab als Funktion vom Ort berechnet wird. Dies kann insbesondere dadurch geschehen, daß der Kalibrierkörper mehrere Durchbrechungen bzw. Einbuchtungen aufweist, so daß auf diese Weise eine Mehrzahl von geometrischen Eigenschaften über den Sichtbereich der Kamera hin vorhanden sind. Diese verschiedenen geometrischen Eigenschaften erlauben dabei eine exakte Kalibrierung auch verzerrter Bilder. Grundsätzlich reicht es dabei aus, die Dickenabhängigkeit des Abbildungsmaßstabes ortsunabhängig zu bestimmen, da die Funktionen des Abbildungsmaßstabes von der Dicke einerseits und vom Ort andererseits im wesentlichen entkoppelt sind.

Um die optische Erfassung des Kalibrierkörpers durch die Kamera möglichst präzise zu gestalten, ist es gemäß Anspruch 10 günstig, wenn in den Kamerabildern nur jene Kanten des Kalibrierkörpers ausgewertet werden, bei denen Stirnflächen des Kalibrierkörpers für die Kamera unsichtbar sind. Die Sichtbarkeit der Stirnflächen des Kalibrierkörpers hängt ausschließlich von der Relativlage zwischen der jeweiligen Stirnfläche einerseits und der Kamera andererseits ab. Befindet sich die Durchbrechung oder Einbuchtung - senkrecht zum Kalibrierkörper betrachtet - beispielsweise links von der Kamera, so können nur die linken Stirnflächen der Durchbrechung bzw. Einbuchtungen von der Kamera gesehen werden. In diesem Fall werden nur die rechten Stirnflächen im Kamerabild ausgewertet. Befindet sich die Durchbrechung oder Einbuchtung dagegen rechts von der Kamera, so werden die linken Kanten der Durchbrechung oder Einbuchtung ausgewertet. Falls dagegen die Durchbrechung sowohl links als auch rechts von der Kamera positioniert ist, kann keine der beiden Stirnflächen ordnungsgemäß ausgewertet werden. In diesem Fall werden die nächstliegenden Kanten der jeweils benachbarten Durchbrechungen bzw. Einbuchtungen genutzt. Auf diese Weise ist gewährleistet, daß eine fehlerhafte Auswertung der der Kamera abgewandten Unterkante des Kalibrierkörpers ausgeschlossen ist.

Der Erfindungsgegenstand wird beispielhaft anhand der Zeichnung erläutert, ohne den Schutzumfang zu beschränken.

Es zeigt:
- Figur 1: eine räumliche Darstellung eines Kalibrierkör- pers mit einer Kamera,
- Figur 2: die Darstellung gemäß Figur 1 mit umgedrehtem Kalibrierkörper,
- Figur 3: eine vergrößerte Detaildarstellung der Anord- nung gemäß Figur 1,
- Figur 4: ein Diagramm und
- Figur 5: eine alternative Ausführungsform des Kalibrier- körpers.

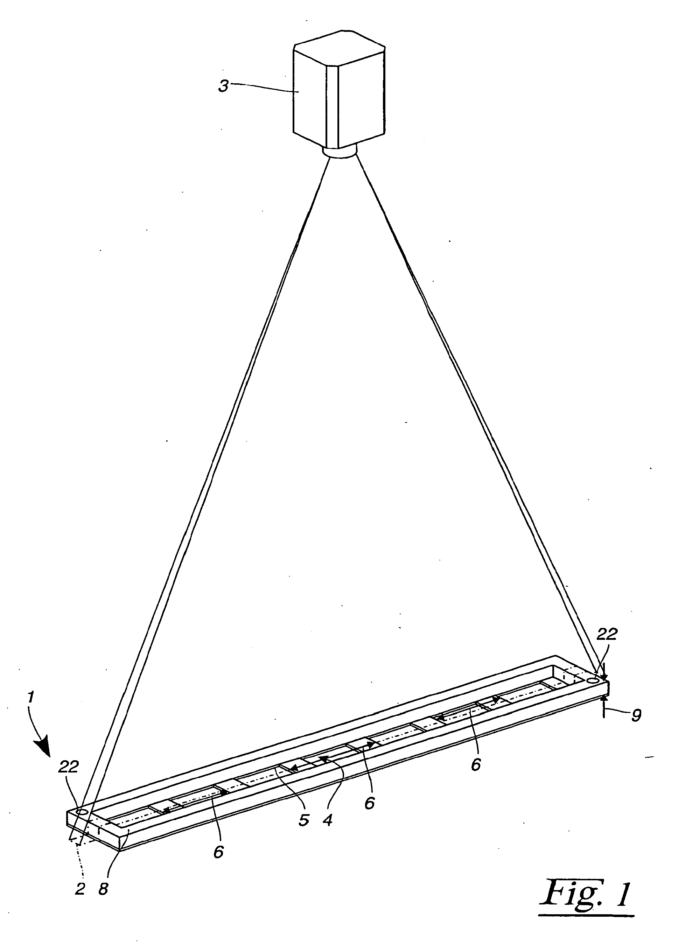

Ein Kalibrierkörper 1 gemäß Figur 1, der vorzugsweise aus einem Eisenmaterial besteht, ist in einem Sichtfeld 2 einer Kamera 3 vorgesehen. Die Kamera 3 ist dabei als Zeilenkamera ausgebildet, so daß das Sichtfeld 2 ein langes aber gleichzeitig schmales Rechteck bildet.

Der Kalibrierkörper 1 weist einen zentralen Kalibrierbereich 4 auf, in dem eine Anzahl von Durchbrechungen 5 vorgesehen ist. Diese Durchbrechungen 5 sind von der Kamera 3 kontrastreich erfaßbar. Begrenzungskanten der Durchbrechungen 5 weisen bekannte Kalibrierlängen auf. Aus den bekannten Kalibrierlängen 6 und Abständen 7 kann mit Hilfe eines von der Kamera 3 aufgenommenen Bildes der Abbildungsmaßstab der Kamera 3 über das Sichtfeld 2 hinweg berechnet werden. Aufgrund dieser Berechnung kann bei einer Aufnahme eines realen Objekts mit Hilfe der Kamera 3 die exakte Dimension des Objekts im Sichtfeld 2 der Kamera 3 berechnet werden.

Der Kalibrierkörper 1 weist außerdem einen Stützfuß 8 auf, der sich rahmenartig um den Kalibrierbereich 4 herum erstreckt. Dieser Stützfuß 8 gibt dem Kalibrierkörper 1 eine günstige Formsteifigkeit, so daß der Kalibrierbereich 4 mit relativ dünner Wandstärke ausgebildet sein kann. Im Ausführungsbeispiel sind der Kalibrierbereich 4 und der Stützfuß 8 getrennt erstellte Teile, die anschließend miteinander verbunden werden. Alternativ kann der Kalibrierkörper auch einstückig gefertigt werden.

Der Kalibrierkörper 1 weist im Bereich des Stützfußes 8 zwei Indexierungen 22 auf, die im Ausführungsbeispiel gemäß Figur 1 lediglich beispielhaft in Form von Bohrungen ausgeführt sind. Alternativ kann auch jede beliebige andere Indexierung wie beispielsweise Stifte genutzt werden. Die Indexierung 22 sorgt für eine reproduzierbare, exakte Positionierung des Kalibrierkörpers 1 relativ zur Kamera 3, was die Erfassung der Durchbrechungen 5 erleichtert.

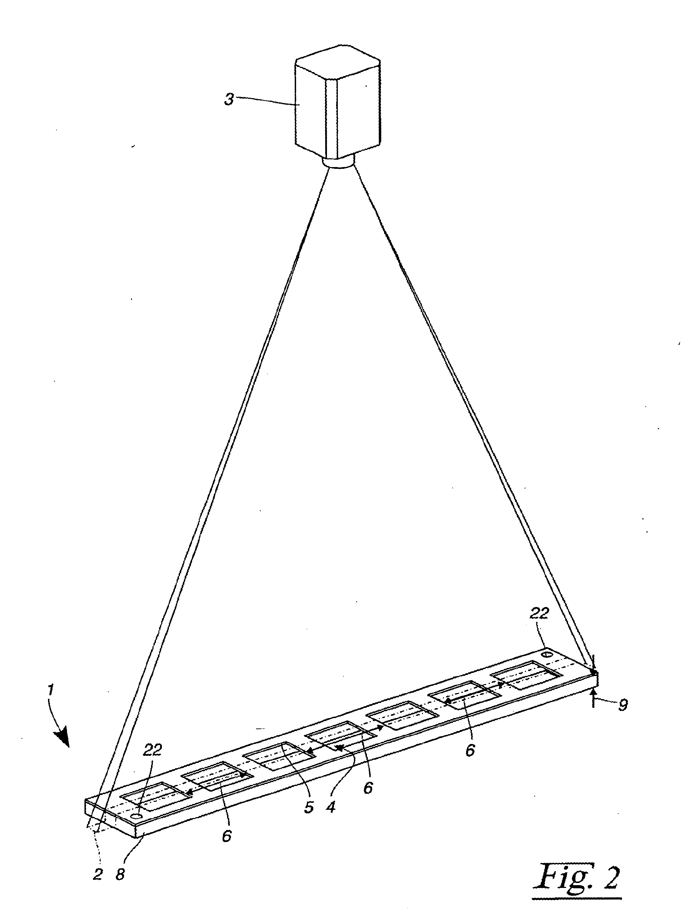

Die Figur 2 zeigt die Anordnung gemäß Figur 1, wobei der Kalibrierkörper 1 umgedreht wurde. Damit liegt der Kalibrierkörper 1 auf dem Stützfuß 8 auf. Bei dieser Anordnung kommt der Kalibrierbereich 4 des Kalibrierkörpers 1 der Kamera 3 um eine Höhe 9 des Stützfußes 8 näher. Dies hat Auswirkungen auf die Abbildungsverhältnisse der Kamera 3, so daß auf diese Weise eine Abhängigkeit des Abbildungsmaßstabes von einer Objektdicke bestimmt werden kann.

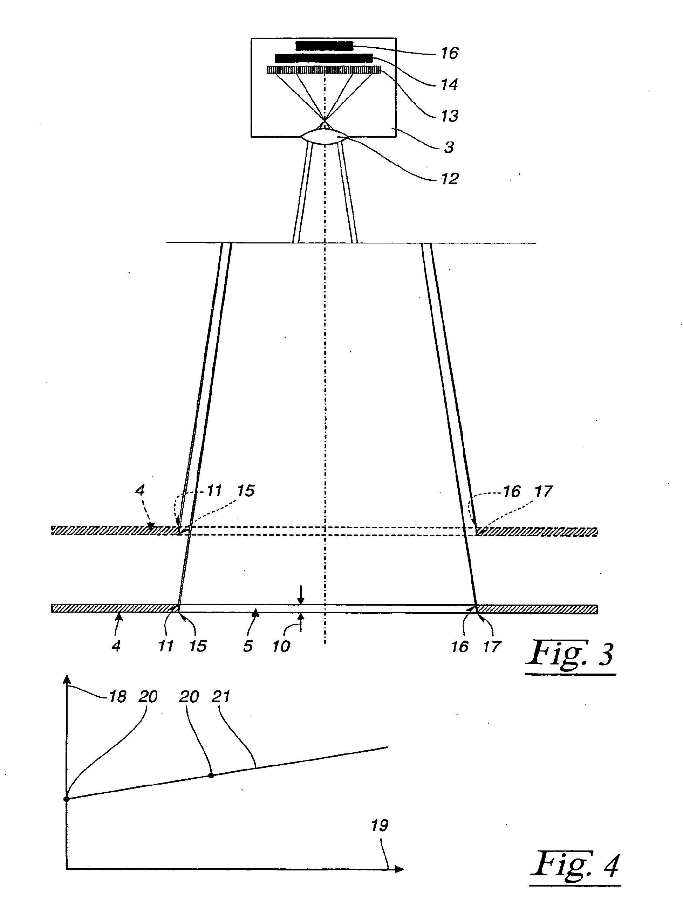

Die Figur 3 zeigt eine vergrößerte, geschnittene Detaildarstellung der Anordnung gemäß Figur 1 bzw. 2 mit geschnittenem Strahlengang. Aus dieser Darstellung ist insbesondere zu erkennen, daß der Kalibrierkörper 1 im Kalibrierbereich 4 eine relativ geringe Wandstärke 10 aufweist. Eine Oberkante 11 der Durchbrechung 5 liefert mittels eines Objektivs 12 der Kamera 3 auf einem Fotodetektor 13 ein erstes Bild 14. Eine Unterkante 15 derselben Durchbrechung 5 ist dabei so nah an der Oberkante 11, daß es bei den vorliegenden Abbildungsverhältnissen das gleiche erste Bild 14 wie die Oberkante 11 liefert. Damit verursachen Unterschiede durch die Erfassung einerseits der Oberkante 11 und andererseits der Unterkante 15 der Durchbrechung 5 Fehler von höchstens einem Pixel, also von der Genauigkeit des Fotodetektors 13. Falls die Auflösung des Fotodetektors 13 für die jeweilige Applikation nicht vollständig ausgenutzt werden muß, können auch geringfügig unterschiedliche Bilder 14 der Ober- 11 und Unterkante 15 toleriert werden. Bei der rechten Ober- 16 und Unterkante 17 ergeben sich entsprechende geometrische Verhältnisse.

Bei umgedrehtem Kalibrierkörper 1 liegt der Kalibrierbereich 4 näher an der Kamera 3, was in Figur 3 durch strichlierte Linien dargestellt ist. Die Ober- 11 und Unterkanten 15 liefern in diesem Fall ein zweites Bild 14' am Fotodetektor 13, welches vom ersten Bild 14 hinreichend weit beabstandet ist. Wichtig hierbei ist nicht die absolute Lage des ersten 14 und zweiten Bildes 14` auf dem Fotodetektor 13, sondern lediglich die Breite der Durchbrechung 5 im Kamerabild. Vorzugsweise werden zur Erzielung einer höheren Genauigkeit die Abstände möglichst weit auseinander liegender Durchbrechungen 5 vermessen. Außerdem werden bevorzugt jene Oberkanten 11, 16 ausgewertet, bei denen sich die korrespondierenden Unterkanten 15, 17 nicht im Sichtfeld der Kamera 3 befinden.

Aus dem ersten Bild 14 und zweiten Bild 14' werden bei bekannten Dimensionen des Kalibrierkörpers 1 Abbildungsmaßstäbe 18 als Funktion der Objektdicke 19 des zu untersuchenden Objekts ermittelt. Das erste Bild 14 korrespondiert dabei mit der Dicke Null, während das zweite Bild 14' der Höhe 9 entspricht. Auf diese Weise erhält man im Diagramm gemäß Figur 4 zwei Punkte 20, die eine lineare Funktion 21 definieren. Diese lineare Funktion 21 ergibt für jede Objektdicke 19 den entsprechenden Abbildungsmaßstab 18, so daß die Kamera 3 für beliebige Objektdicken kalibriert ist.

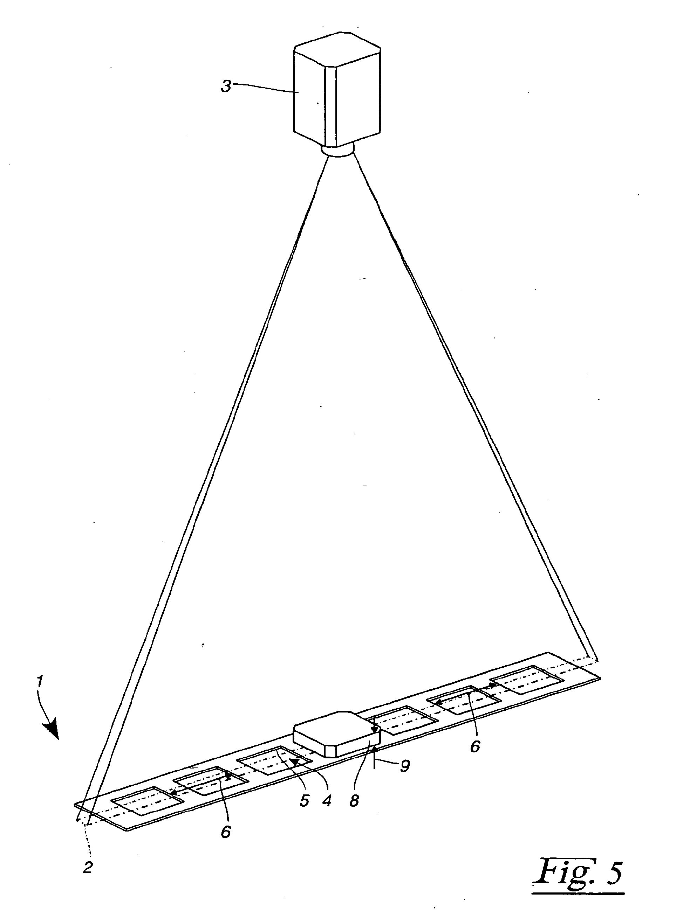

Die Figur 5 zeigt eine alternative Ausführungsform des Kalibrierkörpers 1 gemäß Figur 1. Bei dieser Ausführungsform ist der Stützfuß 8 als Zentralblock ausgebildet, um den herum sich der Kalibrierbereich 4 erstreckt.

### Bezugszeichenliste

- 1: Kalibrierkörper
- 2: Sichtfeld
- 3: Kamera
- 4: Kalibrierbereich
- 5: Durchbrechung
- 6: Kalibrierlänge
- 8: Stützfuß
- 9: Höhe
- 10: Wandstärke
- 11: Oberkante
- 12: Objektiv
- 13: Fotodetektor
- 14: erstes Bild
- 14`: zweites Bild
- 15: Unterkante
- 16: Oberkante
- 17: Unterkante
- 18: Abbildungsmaßstab
- 19: Objektdicke
- 20: Punkt
- 21: lineare Funktion
- 22: Indexierung

## Patentansprüche

1. Kalibrierkörper zum Kalibrieren des Abbildungsmaßstabes (18) einer Kamera (3), wobei der Kalibrierkörper (1) mindestens einen Kalibrierbereich (4) aufweist, in dem mindestens eine von der Kamera (3) erfaßbare Durchbrechung (5) und/oder Einbuchtung vorgesehen ist, **dadurch gekennzeichnet, daß** zur Bestimmung der Abhängigkeit des Abbildungsmaßstabes (18) von einer Dicke (19) eines von der Kamera (3) zu erfassenden Objekts der Kalibrierkörper (1) mindestens einen Stützfuß (8) aufweist, dessen Höhe (9) derart gewählt ist, daß durch Umdrehen des Kalibrierkörpers (1) und Abstellen auf den mindestens einen Stützfuß (8) der Kalibrierbereich (4) des Kalibrierkörpers (1) der Kamera (3) um die Höhe (9) des Stützfußes (8) näherkommt, und im Abbildungsmaßstab (18) des Kamerabildes (14, 14`) eine auswertbare Veränderung entsteht, wobei die Höhe (9) des mindestens einen Stützfußes (8) mindestens doppelt so groß wie eine Wandstärke (10) des Kalibrierkörpers (1) im Kalibrierbereich (4) ist.

2. Kalibrierkörper nach Anspruch 1, **dadurch gekennzeichnet, daß** der Kalibrierkörper (1) im Kalibrierbereich (4) eine derart geringe Wandstärke (10) aufweist, daß Ober- (11, 16) und Unterkanten (15, 17) der Durchbrechung (5) und/oder Einbuchtung im Kamerabild (14, 14`) für den Kalibriervorgang vernachlässigbare Unterschiede ergeben.

3. Kalibrierkörper nach Anspruch 1 oder 2, **dadurch gekennzeichnet, daß** der Kalibrierkörper (1) im Kalibrierbereich (4) eine Wandstärke (10) von höchstens 2 mm aufweist.

4. Kalibrierkörper nach mindestens einem der Ansprüche 1 bis 3, **dadurch gekennzeichnet, daß** der mindestens eine Stützfuß (8) mindestens 10 mm lang ist.

5. Kalibrierkörper nach mindestens einem der Ansprüche 1 bis 4, **dadurch gekennzeichnet, daß** der mindestens eine Stützfuß (8) randseitig zum Kalibrierkörper (1) vorgesehen ist.

6. Kalibrierkörper nach mindestens einem der Ansprüche 1 bis 5, **dadurch gekennzeichnet, daß** sich der mindestens eine Stützfuß (8) U- oder rahmenförmig um den Kalibrierbereich (4) erstreckt.

7. Kalibrierkörper nach mindestens einem der Ansprüche 1 bis 6, **dadurch gekennzeichnet, daß** er mindestens eine Indexierung (22) zur Lagesicherung aufweist.

8. Kalibrierverfahren für eine Kamera (3), wobei mindestens ein Kalibrierkörper (1) nach mindestens einem der Ansprüche 1 bis 7 in ein Sichtfeld (2) der Kamera (3) gelegt und ein erstes Bild (14) erzeugt wird, **dadurch gekennzeichnet, daß** der Kalibrierkörper (1) anschließend umgedreht und mit der Kamera (3) eine zweites Bild (14`) erzeugt wird, wobei aus beiden Bildern (14, 14`) bei bekannten Abmessungen des Kalibrierkörpers (1) Abbildungsmaßstäbe (18) berechnet werden, die zwei Punkte (20) einer linearen Funktion (21) des Abbildungsmaßstabes (18) von einer Objektdicke (19) bilden, wobei aus der linearen Funktion (21) bei vorgegebener Objektdicke (19) der jeweilige Abbildungsmaßstab (18) berechnet wird.

9. Kalibrierverfahren nach Anspruch 8, **dadurch gekennzeichnet, daß** der Abbildungsmaßstab (18) als Funktion vom Ort berechnet wird.

10. Kalibrierverfahren nach Anspruch 8 oder 9, **dadurch gekennzeichnet, daß** in den Bildern (14, 16) der Kamera (3) jene Kanten (11, 16) ausgewertet werden, bei denen Stirnflächen des Kalibrierkörpers (1) für die Kamera (3) unsichtbar sind.

## Claims

1. Calibration element for calibrating the magnification ratio (18) of a camera (3), the calibration element (1) having at least one calibration region (4) in which there is provided at least one perforation (5) and/or indentation that can be detected by the camera (3), **characterized in that,** in order to determine the dependence of the magnification ratio (18) of a thickness (19) of an object to be detected by the camera (3), the calibration element (1) has at least one support foot (8), whose height (9) is selected in such a way that the calibration region (4) of the calibration element (1) of the camera (3) comes closer to the height (9) of the support foot (8) by rotating the calibration element (1) and setting it down on the at least one support foot (8), and a variation which can be evaluated is produced in the magnification ratio (18) of the camera image (14, 14'), the height (9) of the at least one support foot (8) being at least twice as large as a wall thickness (10) of the calibration element (1) in the calibration region (4).

2. Calibration element according to Claim 1, **characterized in that** in the calibration region (4) the calibration element (1) has a wall thickness (10) so slight that upper (11, 16) and lower edges (15, 17) of the perforation (5) and/or indentation produce differences in the camera image (14, 14') that are negligible for the calibration procedure.

3. Calibration element according to Claim 1 or 2, **characterized in that** the calibration element (1) has a wall thickness (10) of at most 2 mm in the calibration region (4).

4. Calibration element according to at least one of Claims 1 to 3, **characterized in that** the at least one support foot (8) is at least 10 mm long.

5. Calibration element according to at least one of Claims 1 to 4, **characterized in that** the at least one support foot (8) is provided at the edge of the calibration element (1).

6. Calibration element according to at least one of Claims 1 to 5, **characterized in that** the at least one support foot (8) extends in the shape of a U or frame around the calibration element (4).

7. Calibration element according to at least one of Claims 1 to 6, **characterized in that** it has at least one indexing means (22) for securing position.

8. Calibration method for a camera (3), at least one calibration element (1) according to at least one of Claims 1 to 7 being laid in a field of view (2) of the camera (3) and a first image (14) being produced, **characterized in that** the calibration element (1) is subsequently rotated and a second image (14') is produced with the aid of the camera (3), there being calculated from two images (14, 14') in conjunction with known dimensions of the calibration element (1) magnification ratios (18) that form two points (20) of a linear function (21) of the magnification ratio (18) of an object thickness (19), the respective magnification ratio (18) being calculated from the linear function (21) given the prescribed object thickness (19).

9. Calibration method according to Claim 8, **characterized in that** the magnification ratio (18) is calculated as a function of the location.

10. Calibration method according to Claim 8 or 9, **characterized in that** edges (11, 12) to be evaluated in the images (14, 16) of the camera (3) are those in the case of which end faces of the calibration element (1) are invisible to the camera (3).

## Revendications

1. Gabarit de calibrage pour calibrer l'échelle de représentation (18) d'une caméra (3), le gabarit de calibrage (1) présentant au moins une zone de calibrage (4) dans laquelle est prévue au moins une percée (5) et/ou un creux pouvant être détecté par la caméra (3), **caractérisé en ce que** pour déterminer la dépendance de l'échelle de représentation (18) à une épaisseur (19) d'un objet à détecter par la caméra (3), le gabarit de calibrage (1) présente au moins un pied d'appui (8) dont la hauteur (9) est choisie de telle sorte que par un retournement du gabarit de calibrage (1) et la dépose de celui-ci sur l'au moins un pied d'appui (8), la zone de calibrage (4) du gabarit de calibrage (1) se rapproche de la caméra (3) d'une distance égale à la hauteur (9) du pied d'appui (8) et il se produit dans l'échelle de représentation (18) de l'image de la caméra (14, 14') une modification qui peut être interprétée, la hauteur (9) de l'au moins un pied d'appui (8) étant au moins égale au double d'une épaisseur de paroi (10) du gabarit de calibrage (1) dans la zone de calibrage (4).

2. Gabarit de calibrage selon la revendication 1, **caractérisé en ce que** le gabarit de calibrage (1) présente dans la zone de calibrage (4) une épaisseur de paroi (10) suffisamment mince pour que les bords supérieur (11, 16) et inférieur (15, 17) de la percée (5) et/ou du creux présentent des différences négligeables dans l'image de la caméra (14, 14') pour l'opération de calibrage.

3. Gabarit de calibrage selon la revendication 1 ou 2, **caractérisé en ce que** le gabarit de calibrage (1) présente dans la zone de calibrage (4) une épaisseur de paroi (10) maximale de 2 mm.

4. Gabarit de calibrage selon au moins l'une des revendications 1 à 3, **caractérisé en ce que** l'au moins un pied d'appui (8) a une longueur minimale de 10 mm.

5. Gabarit de calibrage selon au moins l'une des revendications 1 à 4, **caractérisé en ce que** l'au moins un pied d'appui (8) est prévu sur le bord par rapport au gabarit de calibrage (1).

6. Gabarit de calibrage selon au moins l'une des revendications 1 à 5, **caractérisé en ce que** l'au moins un pied d'appui (8) s'étend en forme de U ou en forme de cadre autour de la zone de calibrage (4).

7. Gabarit de calibrage selon au moins l'une des revendications 1 à 6, **caractérisé en ce qu'**il présente au moins un indexage (22) pour sécuriser la position.

8. Procédé de calibrage pour une caméra (3), au moins un gabarit de calibrage (1) selon au moins l'une des revendications 1 à 7 étant placé dans un champ de vision (2) de la caméra (3) et une première image (14) étant produite, **caractérisé en ce que** le gabarit de calibrage (1) est ensuite retourné et une deuxième image (14') est produite avec la caméra (3), des échelles de représentation (18) étant calculées à partir des deux images (14, 14') lorsque les dimensions du gabarit de calibrage (1) sont connues, lesquelles forment deux points (20) d'une fonction linéaire (21) de l'échelle de représentation (18) d'une épaisseur d'un objet (19), l'échelle de représentation (18) correspondante étant calculée à partir de la fonction linéaire (21) lorsque l'épaisseur de l'objet (19) est connue.

9. Procédé de calibrage selon la revendication 8, **caractérisé en ce que** l'échelle de représentation (18) est calculée sur place en tant que fonction.

10. Procédé de calibrage selon la revendication 8 ou 9, **caractérisé en ce que** dans les images (14, 16) de la caméra (3) sont interprétés les bords (11, 16) avec lesquels les faces frontales du gabarit de calibrage (1) sont invisibles pour la caméra (3).
